# EUROPEAN PATENT SPECIFICATION

(11) **EP 2 884 514 B1**
(45) Date of publication and mention of the grant of the patent: **03.01.2018**
(21) Application number: 14193851.4
(22) Date of filing: 19.11.2014
(51) Int. Cl.: H01H 1/40, H01H 15/06, H01H 13/14, H01H 13/52, H01H 15/24, H01H 11/06

(54) **SWITCH**
SCHALTER
COMMUTATEUR

(30) Priority: 04.12.2013 JP 2013251172
(43) Date of publication of application: 17.06.2015
(73) Proprietor: OMRON CORPORATION, Kyoto, Kyoto 600-8530 (JP)
(72) Inventor: Maeta, Kazushi, Okayama, Okayama 703-8502 (JP)
(74) Representative: Horn Kleimann Waitzhofer Patentanwälte PartG mbB

(56) References cited:
- FR-A1- 2 785 084
- GB-A- 1 137 711
- US-A- 4 871 885

## Description

### FIELD

The present invention relates to a switch and in particular, a switch that switches contacts by a 3-directional operation.

Conventionally, one example of the switch that switches contacts by the 3-directional operation is a vehicle-mounted switch that switches a vehicle from automatic driving to manual driving, and then shifts gears.

### BACKGROUND

An example of such a vehicle-mounted switch is a switch unit that detects movement of a target to be detected in a first direction, and movement of the target to be detected in a second direction orthogonal to the first direction, the switch unit including a first moving body that moves in the first direction in cooperation with the movement of the target to be detected in the first direction, a first board having a first detection unit that detects the position of the first moving body in the first direction, a second moving body that moves in the second direction in cooperation with the target to be detected in the second direction orthogonal to the first direction, and a second board having a second detection unit that detects the position of the second moving body in the second direction (refer to Japanese Unexamined Patent Publication No. 2012-059603).

However, as shown in Figs. 4 and 5 of Japanese Unexamined Patent Publication No. 2012-059603, in order to detect outputs in two axial directions, the above switch requires independent molded plates 231 and 331 for respective axes. In particular, fixed terminals 242 need to be bent such that the molded plate 231 and the molded plate 331 form a substantially right angle after insert-molding, making it difficult to acquire high positioning accuracy to cause a variation in operational characteristics.

In the above switch, since the fixed terminals 242 are bent such that the molded plate 231 and the molded plate 331 form a substantially right angle, the volume of the switch disadvantageously increases, making it difficult to reduce the size of the switch.
GB 1 137 711 discloses an electric switch comprising a contact bridge carried by a push-button which is slidable over the surface of a printed circuit board to cause co-operation of the bridge with contacts printed on the board. The switch may be normally open, normally closed or change-over. The button embraces one edge of the board and is biased outwardly by a spring.
FR 2 785 084 discloses a switch including a multi-armed contact lamella brushing several contact pads for different functions. The electrical switch includes a rigid support comprising a disc mounted in a plane perpendicular to the axis of the switch body. The support carries a number of conductive areas forming switch contacts for multiple functions within the switch. An elastic metal component comprises a central region by which it is fastened inside the structure, and a number of arms which ensure an electrical connection with the conductive areas of the support disc. Outer parts of the switch casing are mounted to rotate about the longitudinal axis, thus moving the elastic metal contacts over the fixed conductive areas of the support. Two separate axial sections of the switch rotate to effect control of different functions.

### SUMMARY

A switch according to an aspect of an embodiment of the present invention is a switch according to claim 1.

### BRIEF DESCRIPTION OF THE DRAWINGS

Figs. 1A and 1B are overall perspective views of a first embodiment of a switch according to the present invention when viewed from different angles;
Figs. 2A and 2B are partial cutaway perspective view of the switch shown in Fig. 1B when viewed from different angles;
Fig. 3 is an exploded perspective view of the switch shown in Fig. 1A;
Fig. 4 is an exploded perspective view of the switch shown in Fig. 1A when viewed from another angle;
Figs. 5A and 5B are a perspective view of a base and a front view of a circuit board in Figs. 3 and 4, respectively;
Figs. 6A and 6B are vertical sectional views of the switch shown in Figs. 1A and 1B before and after an operation;
Figs. 7A and 7B are sectional plan views of the switch shown in Figs. 1A and 1B before and after the operation;
Fig. 8 is a sectional plan view of the switch shown in Figs. 1A and 1B after another operation;
Figs. 9A and 9B are overall perspective views of a switch according to a comparative example before and after an operation.
Fig. 10 is an exploded perspective view of the switch shown in Figs. 9A and 9B;
Fig. 11 is an exploded perspective view of the switch shown in Figs. 9A and 9B when viewed from another angle;
Figs. 12A and 12B are a perspective view of a base and a front view of a circuit board in Figs. 10 and 11, respectively;
Figs. 13A and 13B are a sectional plan view and a vertical sectional view of the switch shown in Figs. 9A and 9B, respectively;
Figs. 14A and 14B are overall perspective views of a switch according to a further comparative example before and after an operation;
Fig. 15 is an exploded perspective view of the switch shown in Fig. 14A;
Fig. 16 is an exploded perspective view of the switch shown in Fig. 14A when viewed from another angle;
Figs. 17A and 17B are a perspective view of a base and a front view of a circuit board in Figs. 15 and 16, respectively; and
Figs. 18A and 18B are sectional plan views of the switch shown in Figs. 15 and 16 before and after an operation.

### DETAILED DESCRIPTION

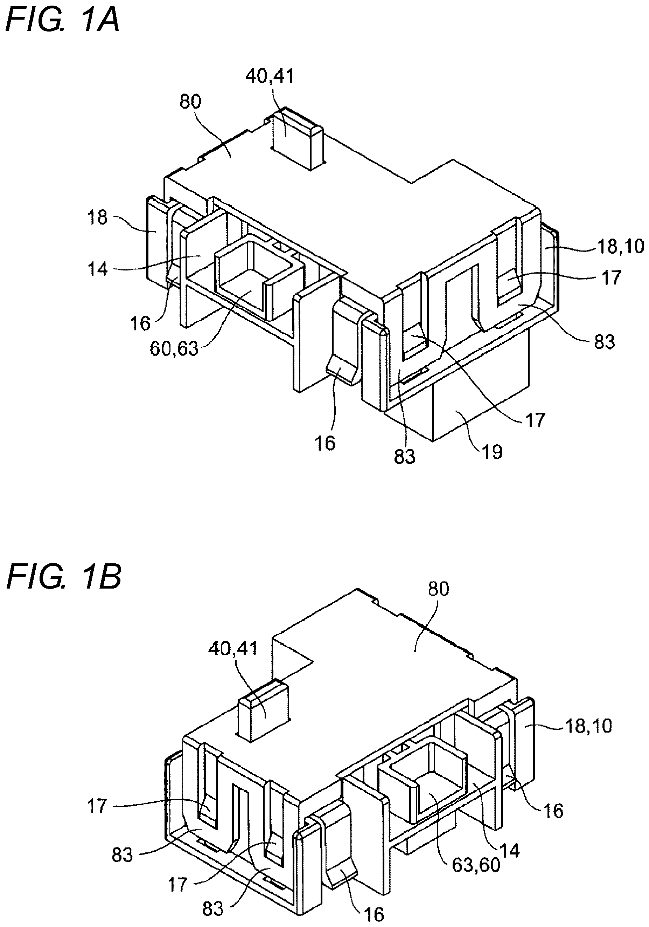

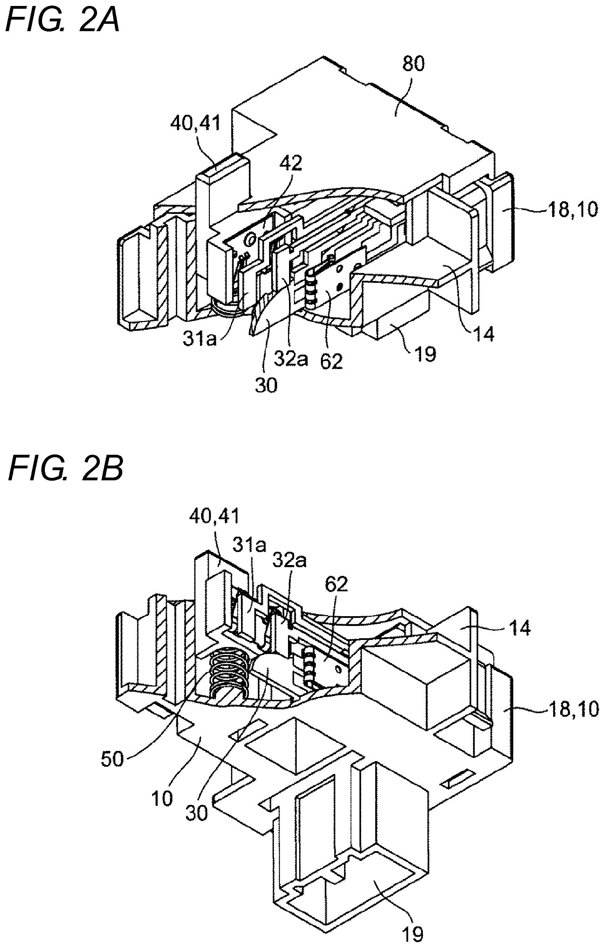

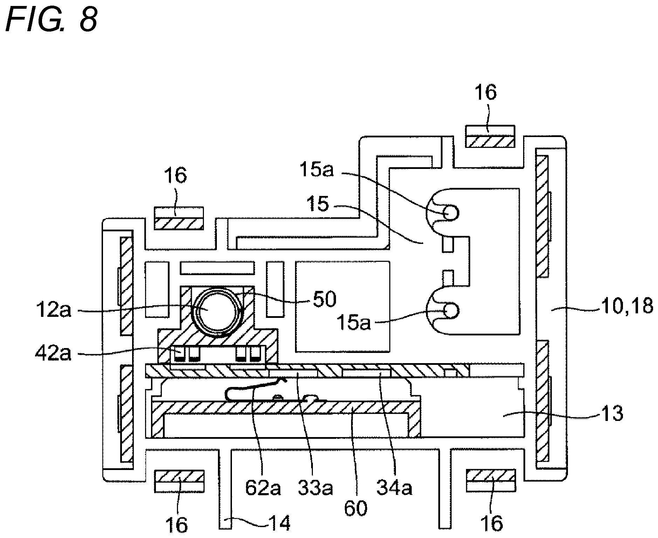

An object of the present invention is to provide a thin switch having a small variation in operational characteristics. Embodiments of a switch according to the present invention will be described with reference to attached drawings of Figs. 1 to 18.

As shown in Figs. 1 to Fig. 8, a switch according to a first embodiment includes a base 10, a circuit board 30, a push button 40 as a first operating member, a first coil spring 50 for returning the push button 40, a slide button 60 as a second operating member, a second coil spring 70 for returning the slide button, and a cover 80.

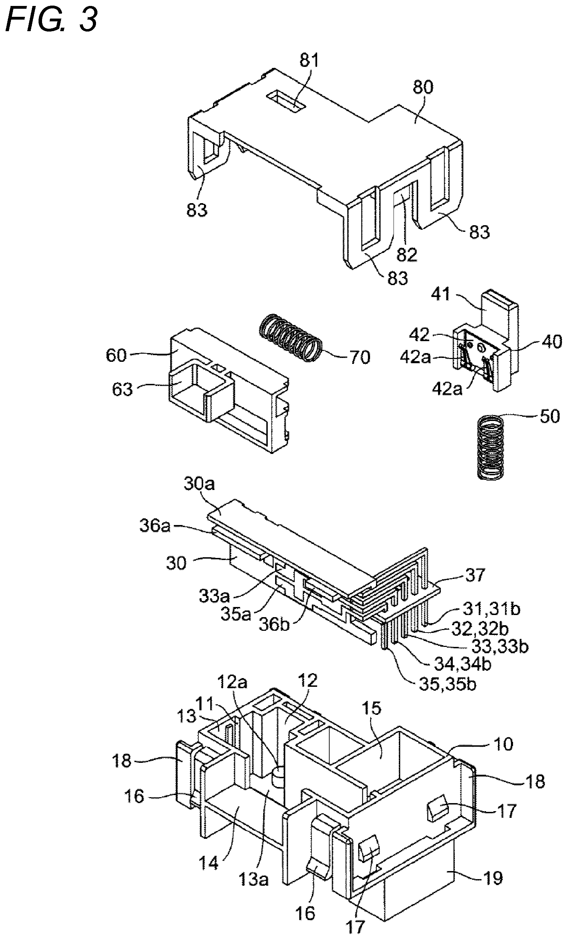

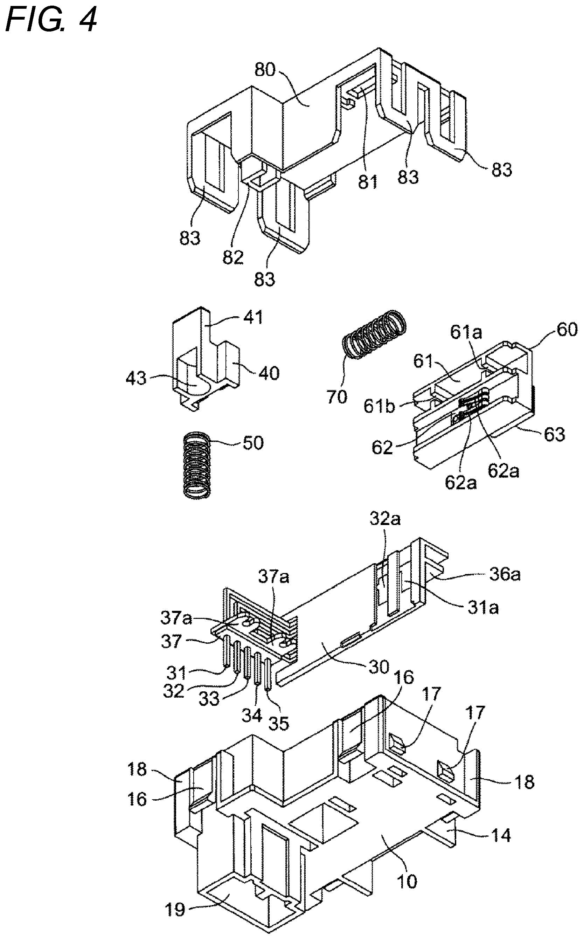

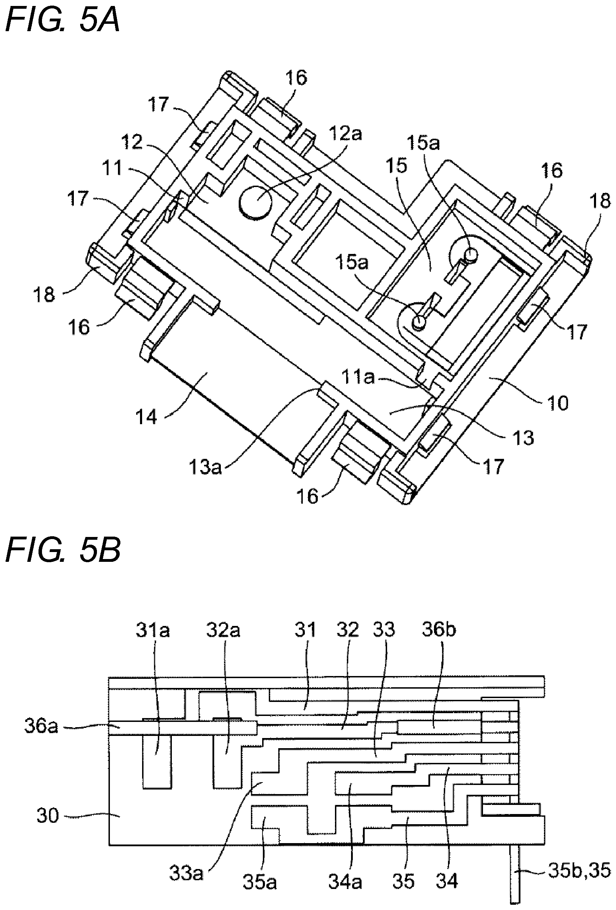

As shown in Fig. 5A, the base 10 has a storage groove 11 for storing the below-mentioned circuit board 30 in its upper face. The storage groove 11 communicates with an engaging recess 12 on its one side, and communicates with a slide groove 13 on the other side. A positioning projection 12a projects from a bottom face of the engaging recess 12. The slide groove 13 communicates with the outside via a notch 13a provided at the outside of the slide groove 13, and the notch 13a has a protective rib 14 having a substantially H-shaped cross section on its outer edge. One end of the slide groove 13 communicates with a terminal storage recess 15 via a notched groove 11a. A pair of positioning protrusions 15a, 15a are provided on a bottom face of the terminal storage recess 15. The base 10 has a pair of attaching elastic claws 16, 16 at corners of each of opposed side faces, and a pair of engaging protrusions 17, 17 at each of other opposed side faces. Protective ribs 18 are provided at outer edges of the other side faces. A substantially rectangular annular connecter receiving portion 19 projects from the bottom face of the base 10 located immediately below the terminal storage recess 15 (See Figs. 3 and 4).

As shown in Fig. 5B, the circuit board 30 is a component having a substantially L-shaped cross section, which is insert-molded such that fixed contacts 31a to 35a of five fixed contact terminals 31 to 35 are flush with one another. The first and second fixed contacts 31a, 32a of the first and second fixed contact terminals 31, 32 are exposed from both faces of the circuit board 30, whereas the third, fourth, and fifth fixed contacts 33a, 34a, and 35a of the third, fourth, and fifth fixed contact terminals 33, 34, and 35 are exposed from only one face of the circuit board 30. A pair of guide ribs 36a, 36b are horizontally in line with each other, and protrude from the face from which the third, fourth, and fifth fixed contacts 33a, 34a, and 35a are exposed. A band-like rib 30a extending from an upper edge of the circuit board 30 toward one side has a planar shape to cover the slide groove 13 of the base 10. Terminal portions 31b to 35b of the first to fifth fixed contact terminals 31 to 35 are supported by a support plate 37 with a predetermined pitch. The support plate 37 is provided with a pair of latching pawls 37a, 37a on the same side (See Fig. 4).

The first and second fixed contacts 31a, 32a of the first and second fixed contact terminals 31, 32 are not necessarily exposed from the both faces of the circuit board 30, and in order to improve the insulation property, the first and second fixed contacts 31a, 32a may be insert-molded so as to be only exposed from one face of the circuit board 30.

As shown in Figs. 3 and 4, the push button 40 has a planar shape so as to engage with the engaging recess 12 of the base 10, and has an operating protrusion 41 at its upper end. The push button 40 is further provided with a movable touch piece 42 having a pair of elastic contacts 42a, 42a swaged to its inner face, and a recess 43 capable of storing the first coil spring 50 on its bottom face. The elastic contacts 42a have a twin-contact structure to increase the contact reliability.

As shown in Fig. 3, the slide button 60 has a planar shape so as to slidably engage with the slide groove 13 via the notch 13a of the base 10. As shown in Fig. 4, the slide button 60 is further provided with a storage groove 61 capable of storing the second coil spring 70 on its inner face, and guide slits 61a, 61b engaging with the guide ribs 36a, 36b of the circuit board 30, respectively, on both sides of the storage groove 61. A movable touch piece 62 having a pair of elastic contacts 62a, 62a is swaged below the guide slits 61a, 61b. The elastic contacts 62a have a twin-contact structure to improve the contact reliability. An operating rib 63 protrudes from an outer side face of the slide button 60.

The cover 80 has a planar shape capable of covering the base, and is provided with an operating hole 81 in its ceiling face and a support protrusion 82 having an inverted C-shaped cross section for preventing an escape of the support plate 37 of the circuit board 30. The cover 80 is further provided with a pair of substantially U-shaped engaging claws 83 on edges of its opposed sides.

A method of assembling the above-mentioned components will be described below.

First, in the state where the second coil spring 70 is engaged with the storage groove 61 of the slide button 60, and the guide slits 61a, 61b of the slide button 60 are engaged with the guide ribs 36a, 36b of the circuit board 30, respectively, the circuit board 30 is positioned with respect to the storage groove 11 of the base 10. Simultaneously, the first to fifth terminal portions 31b to 35b of the first to fifth fixed contact terminals 31 to 35 insert-molded to the circuit board 30 are inserted into the terminal storage recess 15 of the base 10, and the pair of latching pawls 37a of the support plate 37 are engaged with the pair of positioning protrusions 15a provided on the bottom face of the terminal storage recess 15 for positioning. This causes the first to fifth terminal portions 31b to 35b to protrude into the connecter receiving portion 19.

Then, the first coil spring 50 is engaged with the positioning projection 12a on the bottom face of the engaging recess 12 of the base 10, and the push button 40 to which the movable touch piece 42 is swaged is engaged with the engaging recess 12. This allows the pair of elastic contacts 42a to come into contact with and separate from the first and second fixed contacts 31a, 32a insert-molded to the circuit board 30. Thereby, the operating rib 63 of the slide button 60 can slide in the protective rib 14 of the base 10. Then, the cover 80 is positioned from above the base 10, and the engaging claws 83 are engaged with the engaging protrusions 17 of the base 10 to prevent slip-off. At this time, the operating protrusion 41 of the push button 40 operably protrudes from the operating hole 81 of the cover 80. The support protrusion 82 protrudingly provided on the ceiling face of the cover 80 presses the support plate 37 on the circuit board 30 to prevent a rattle.

Next, a method of operating the switch will be described. As an operational example, a not-shown passenger vehicle is switched from automatic driving to manual driving by using a shift lever, and then gears are shifted.

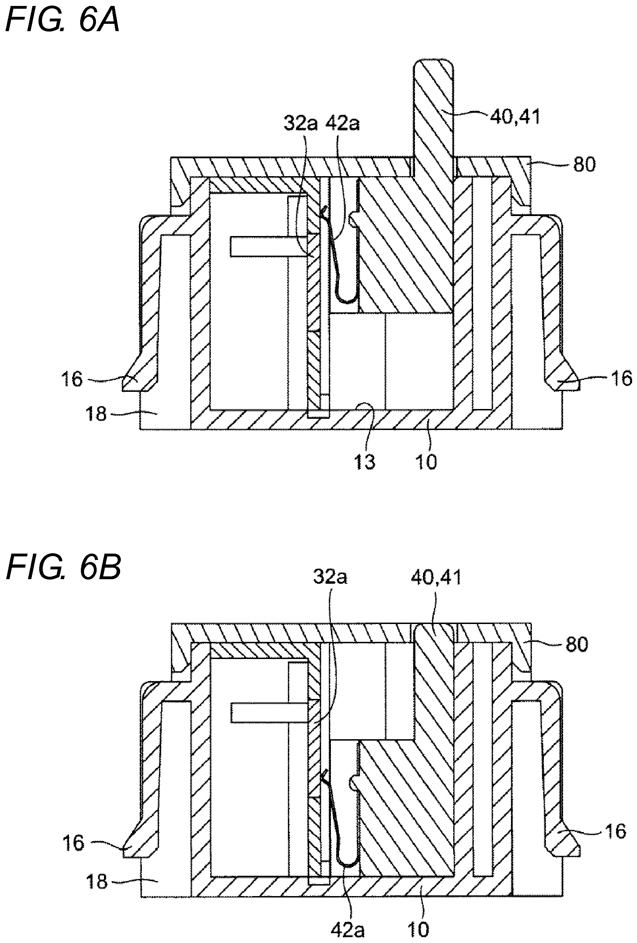

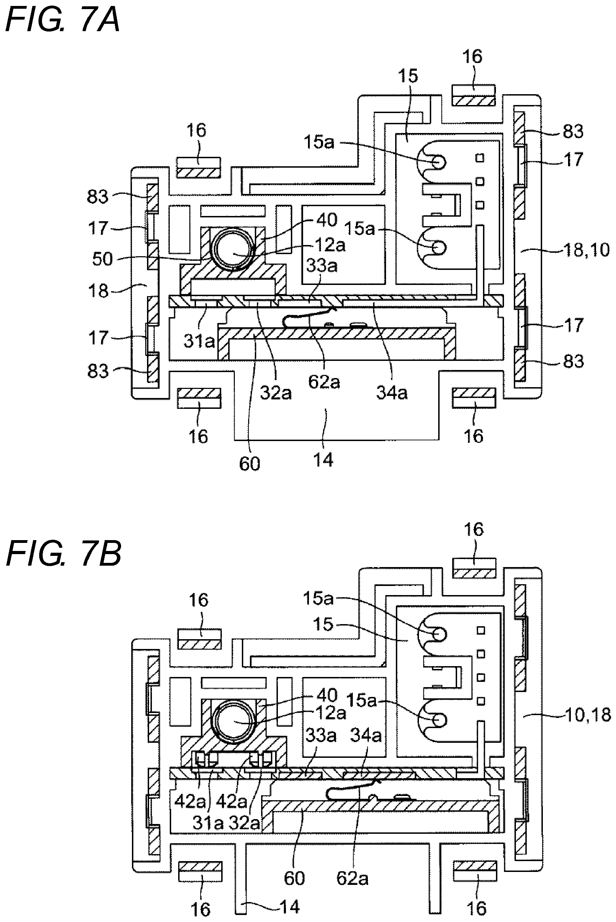

First, before the operation, as shown in Fig. 6A, the push button 40 is moved upward by the first coil spring 50, and the elastic contacts 42a are in press-contact with the circuit board 30 but are not in contact with the first and second fixed contacts 31a, 32a. As shown in Fig. 7A, the elastic contacts 62a on the slide button 60 are not in contact with the third to fifth fixed contacts 33a to 35a on the circuit board 30.

Then, when the shift lever of the passenger vehicle is tilted, the shift lever presses the operating protrusion 41 of the push button 40 downward against the force of the first coil spring 50, thereby bringing the elastic contacts 42a, 42a into contact with the first and second fixed contacts 31a, 32a, and the first and second fixed contact terminals 31, 32 into conduction to output a signal. As a result, automatic driving is switched to manual driving.

Subsequently, when the shift lever is rotated to one side with the shift lever being tilted, the operating rib 63 engaged with the shift lever slides to one side against the force of the second coil spring 70. Thus, the elastic contacts 62a, 62a attached to the slide button 60 come into contact with the fourth and fifth fixed contacts 34a, 35a, bringing the fourth and fifth fixed contact terminals 34, 35 into conduction to output a signal and shift up the gear. Subsequently, when the operating force is decreased, the shift lever automatically returns to a neutral position. However, when the shift lever is rotated again in the above-mentioned direction, the elastic contacts 62a, 62a similarly come into contact with the fourth and fifth fixed contacts 34a, 35a, bringing the fourth and fifth fixed contact terminals 34, 35 into conduction to output a signal and further shift up the gear.

When the operating force is decreased, the shift lever automatically returns to the neutral position. Then, when the shift lever is rotated in the direction opposite to the above-mentioned direction, the elastic contacts 62a, 62a come into contact with the third and fifth fixed contacts 33a, 35a, bringing the third and fifth fixed contact terminals 33, 35 into conduction to output a signal and shift down the gear. Thereafter, when the operating force is decreased, the shift lever automatically returns to the neutral position again.

Subsequently, when the shift lever is returned to the original position, pressing onto the push button 40 is released, the push button 40 is pushed upward by the force of the first coil spring 50 to separate the elastic contacts 42a, 42a from the first and second fixed contacts 31a, 32a, thereby switching manual driving to automatic driving.

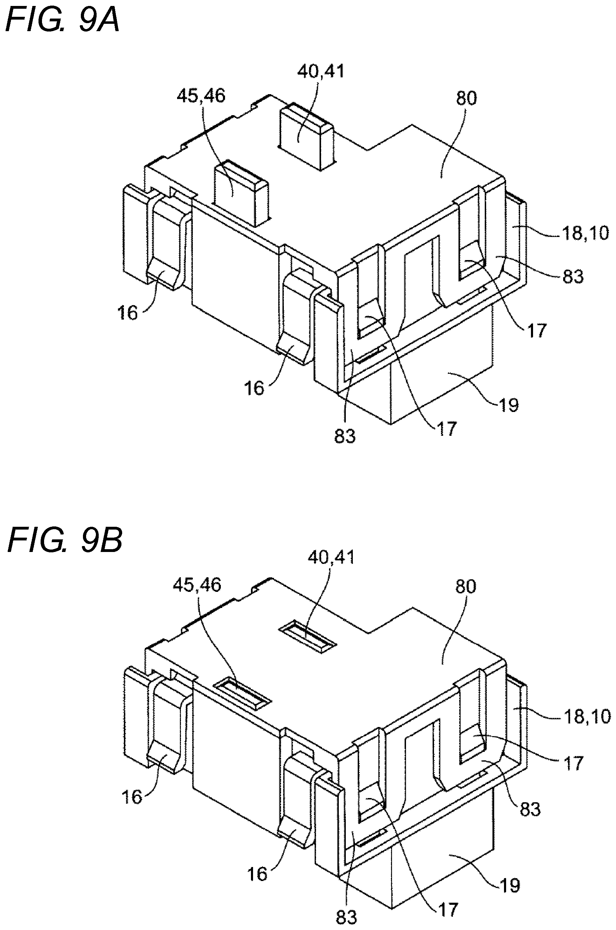

As shown in Figs. 9 to 13, a switch according to a comparative example includes a base 10, a circuit board 30, first and second push buttons 40, 45, first and second coil springs 50, 51 for returning the first and second push buttons 40, 45, and a cover 80.

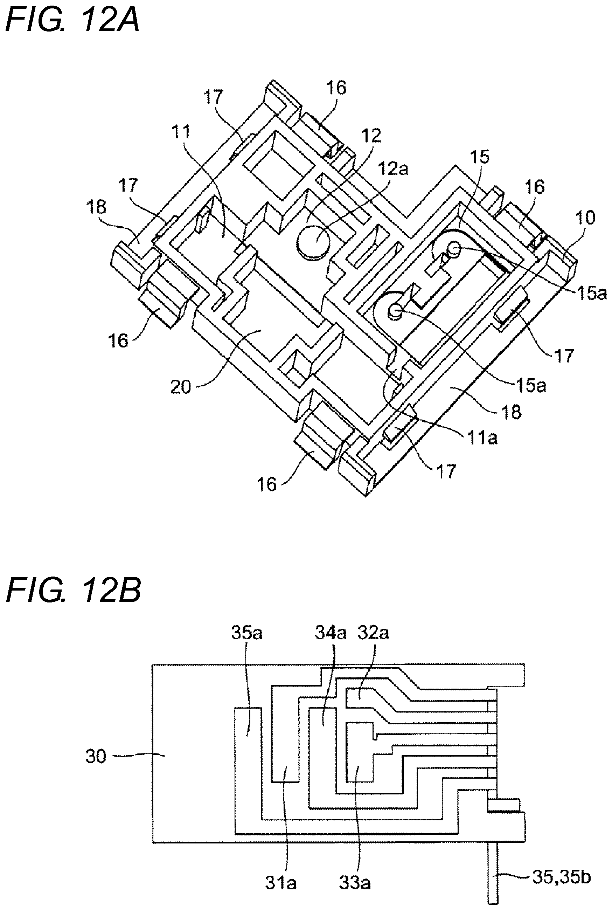

As shown in Fig. 12A, the base 10 has a storage groove 11 for storing the below-mentioned circuit board 30 on its upper face. The storage groove 11 communicates with a first engaging recess 12 on one side, and communicates with a second engaging recess 20 on the other side. A positioning projection 12a protrudes from a bottom face of the first engaging recess 12. The other configuration of this comparative example is the same as that of the first embodiment, and thus, the same parts are given the same reference numerals and description thereof is omitted.

As shown in Fig. 12B, the circuit board 30 is a plate-like molded article which is insert-molded such that fixed contacts 31a to 35a of five fixed contact terminals 31 to 35 are flush with one another. Fourth and fifth fixed contacts 34a, 35a of fourth and fifth fixed contact terminals 34, 35 are exposed from both faces of the circuit board 30, whereas first, second, and third fixed contacts 31a to 33a of first, second, and third fixed contact terminals 31 to 33 are exposed from only one face of the circuit board 30. Terminal portions 31b to 35b of the first to fifth fixed contact terminals 31 to 35 are supported by a support plate with a predetermined pitch. The support plate 37 is provided with a pair of latching pawls 37a, 37a on the same side.

The fourth and fifth fixed contacts 34a, 35a of the fourth and fifth fixed contact terminals 34, 35 are not necessarily exposed from the both faces of the circuit board 30, and to improve the insulation property, the fourth and fifth fixed contacts may be exposed from only one face of the circuit board 30.

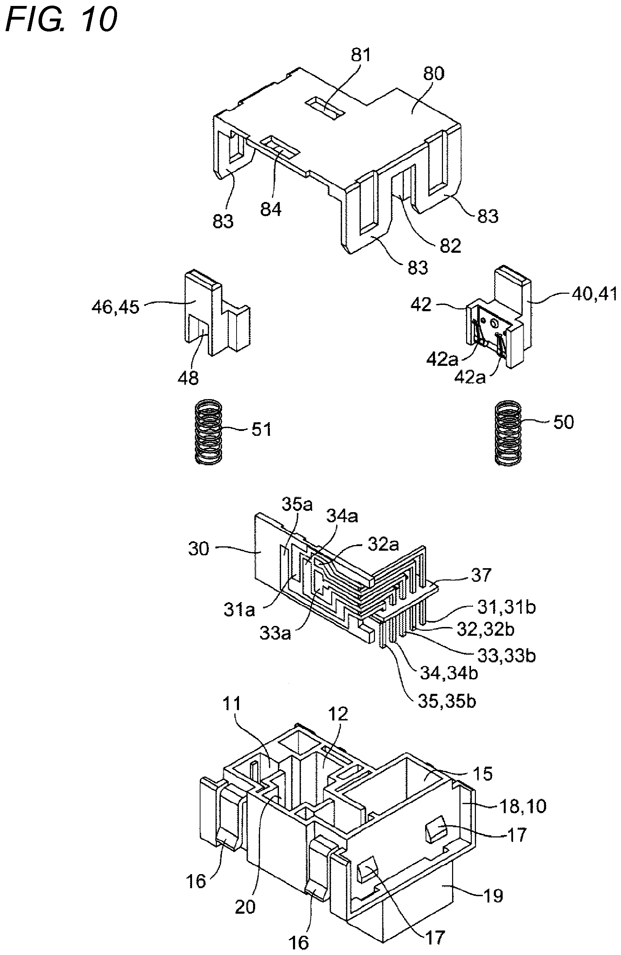

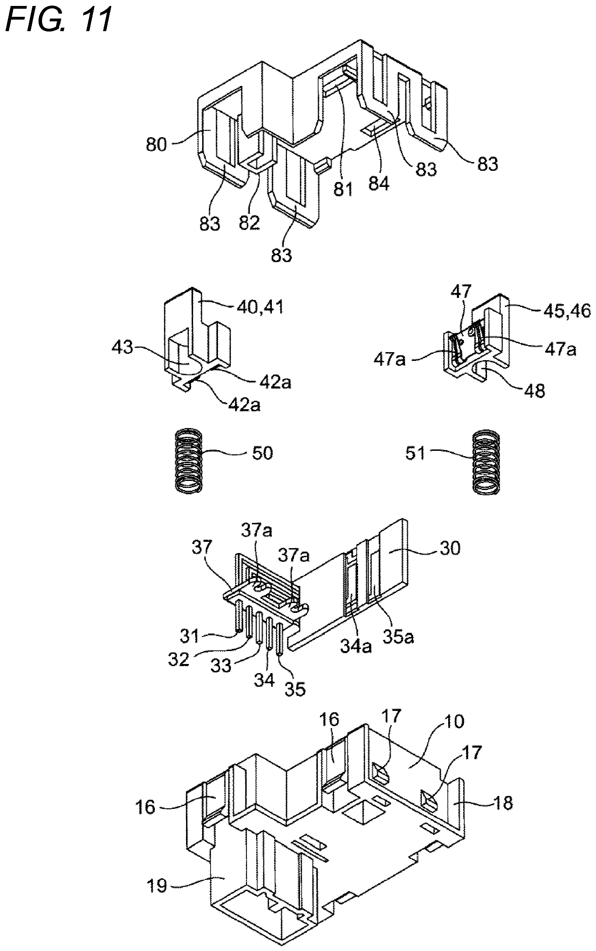

As shown in Figs. 10 and 11, the first and second push buttons 40, 45 have a planar shape so as to engage with the first and second engaging recesses 12, 20 of the base 10, respectively, and have operating protrusions 41, 46, respectively, at their upper ends. The first and second push buttons 40, 45 are further provided with movable touch pieces 42, 47 having a pair of elastic contacts 42a and a pair of elastic contacts 47a, respectively, swaged to their inner faces, and recesses 43, 48 capable of storing the first and second coil springs 50, 51, respectively, on their bottom faces. The elastic contacts 42a, 47a each have a twin-contact structure to increase the contact reliability.

The cover 80 has a planar shape capable of covering the base 10, and has a pair of operating holes 81, 84 on its ceiling face, and a support protrusion 82 having an inverted C-shaped cross section for preventing an escape of the support plate 37 of the circuit board 30. The cover 80 is further provided with a pair of substantially U-shaped engaging claws 83, 83 on edges of its opposed sides.

A method of assembling the above-mentioned components will be described below.

First, the circuit board is positioned with respect to the storage groove 11 of the base 10. Simultaneously, the first to fifth terminal portions 31b to 35b of the first to fifth fixed contact terminals 31 to 35 insert-molded to the circuit board 30 are inserted into the terminal storage recess 15 of the base 10, and the pair of latching pawls 37a of the support plate 37 are engaged with the pair of positioning protrusions 15a on the bottom face of the terminal storage recess 15. Thereby, the first to fifth terminal portions 31b to 35b protrude into the connecter receiving portion 19. The first and second coil springs 50, 51 are engaged with the first and second engaging recesses 12, 20 of the base 10, respectively, and the first and second push buttons 40, 45, to which the movable touch pieces 42, 47 are swaged, are engaged with the engaging recesses 12, 20, respectively. As a result, the pair of elastic contacts 42a, 42a of the first push button 40 can come into contact with and separate from the third and fourth fixed contacts 34a, 35a insert-molded to the circuit board 30, and the pair of elastic contacts 47a, 47a of the second push button 45 can come into contact with and separate from the first fixed contact 31a as a common fixed contact, and the second fixed contact 32a or the third fixed contact 33a. Then, the cover 80 is positioned from above the base 10, and the engaging claws 83 are engaged with the respective engaging protrusions 17 of the base 10 to prevent slip-off. At this time, the operating protrusion 41, 46 of the first and second push buttons 40, 45 operably protrude from the operating hole 81, 84 of the cover 80, respectively. The support protrusion 82 protruding from the ceiling face of the cover 80 presses the support plate 37 of the circuit board 30 to prevent a rattle.

Next, a method of operating the switch will be described.

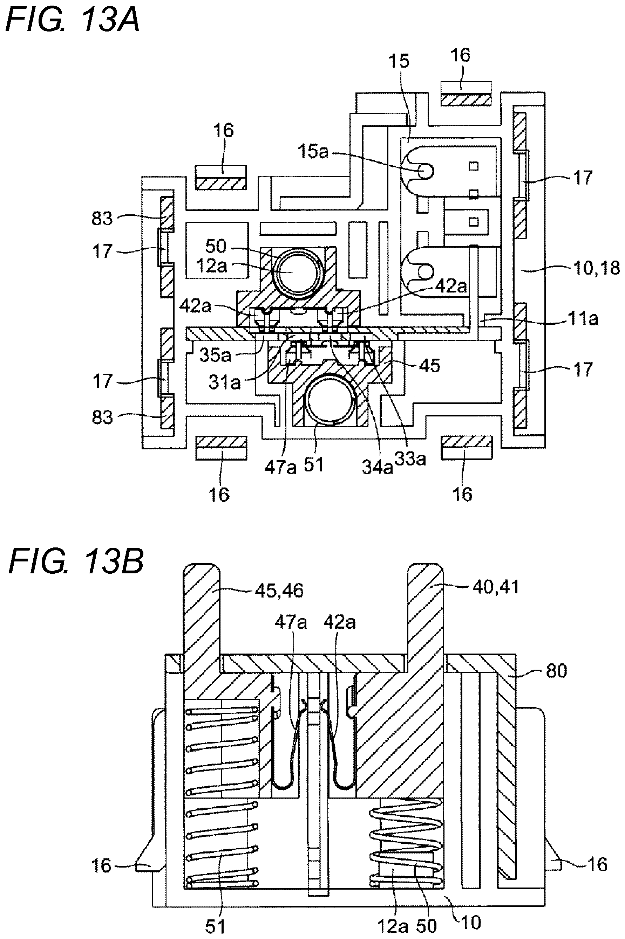

First, before the operation, as shown in Fig. 13B, the push button 40, 45 are moved upward by the first and second coil springs 50, 51, and the elastic contacts 42a and the elastic contacts 47a are in press-contact with the circuit board 30. The elastic contacts 42a are not in contact with the fourth and fifth fixed contacts 34a, 35a, whereas the elastic contacts 47a are in contact with the first and second fixed contacts 31a, 32a, and are in conduction.

When the operating protrusion 41 of the first push button 40 is pushed downward against the force of the first coil spring 50, the elastic contacts 42a come into contact with the fourth and fifth fixed contacts 34a, 35a, bringing the fourth and fifth fixed contact terminals into conduction to output a signal.

Subsequently, when the second push button 45 is pressed down with the first push button 40 being pressed down, the movable touch piece 47 is lowered against the force of the second coil spring 51, and the pair of elastic contacts 47a of the second push button 45 come into contact with the first and third fixed contacts 31a, 33a, bringing the first and third fixed contact terminals into conduction to output a signal. Then, when the pressing onto the first and second push buttons 40, 45 is released, the first and second push buttons 40, 45 return to their original positions due to forces of the first and second coil springs 50, 51.

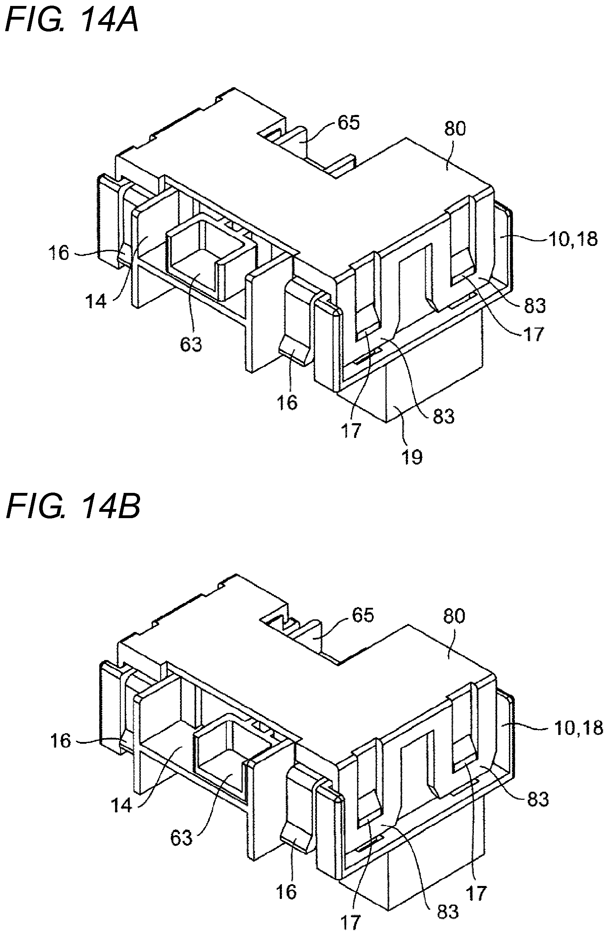

As shown in Figs. 14 to 18, a switch according to a second comparative example includes a base 10, a circuit board 30, first and second slide buttons 60, 65, first and second coil springs 70, 71 for returning the first and second slide buttons 60, 65, and a cover 80.

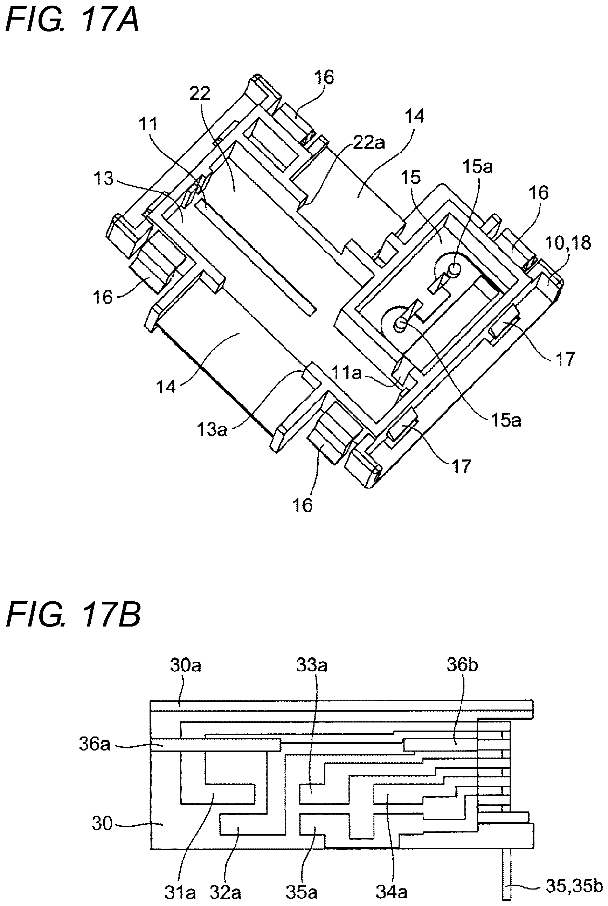

As shown in Fig. 17A, the base 10 has a storage groove 11 for storing the below-mentioned circuit board 30 on its upper face. The storage groove 11 communicates with a first slide groove 13 on one side, and communicates with a second slide groove 22 on the other side. The first slide groove 13 communicates with the outside via a notch 13a provided at the outside of the slide groove 13. The second slide groove 22 communicates with the outside via a notch 22a provided at the outside of the slide groove 22, and a protective rib 14 is provided on the outer edge of the notch 22a. One end of the first slide groove 13 communicates with the terminal storage recess 15 via the notched groove 11a. The terminal storage recess 15 has a pair of positioning protrusions 15a, 15a on its bottom face. The other configuration of the second comparative example is the same as that of the first embodiment, and thus, the same parts are given the same reference numerals and description thereof is omitted.

As shown in Fig. 17B, the circuit board 30 is a molded article having a substantially T-shaped cross section, which is insert-molded such that fixed contacts 31a to 35a of five fixed contact terminals 31 to 35 are flush with one another, and first and second fixed contacts 31a, 32a of first and second fixed contact terminals 31, 32 are exposed from both faces of the circuit board 30, whereas third, fourth, and fifth fixed contacts 33a to 35a of third, fourth, and fifth fixed contact terminals 33 to 35 are exposed from only a back face of the circuit board 30. A band-like rib 30a extending from an upper edge of the circuit board 30 toward the both sides has a planar shape to cover the slide grooves 13, 22 of the base 10. A pair of guide ribs 36a, 36b are horizontally in line with each other, and protrude from the back face of the circuit board 30, and a pair of guide ribs 38a, 38b are horizontally in line with each other, and protrude from the front face of the circuit board 30. Terminal portions 31b to 35b of the first to fifth fixed contact terminals 31 to 35 are supported by a support plate 37 with a predetermined pitch. The support plate 37 is provided with a pair of latching pawls 37a, 37a on the same side.

The first and second fixed contacts 31a, 32a of the first and second fixed contact terminals 31, 32 are not necessarily exposed from both faces of the circuit board 30, and to improve the insulation property, the first and second fixed contacts 31a, 32a may be exposed from only one face of the circuit board 30.

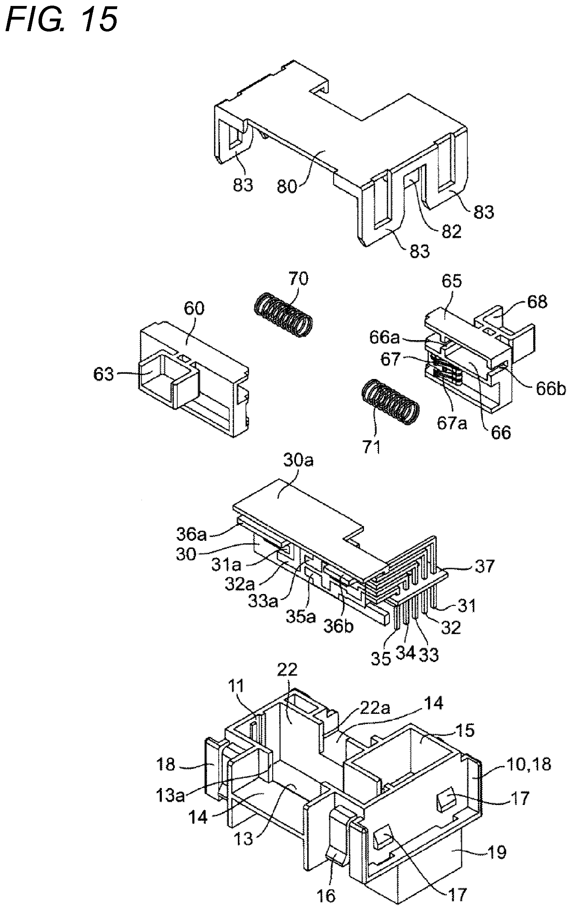

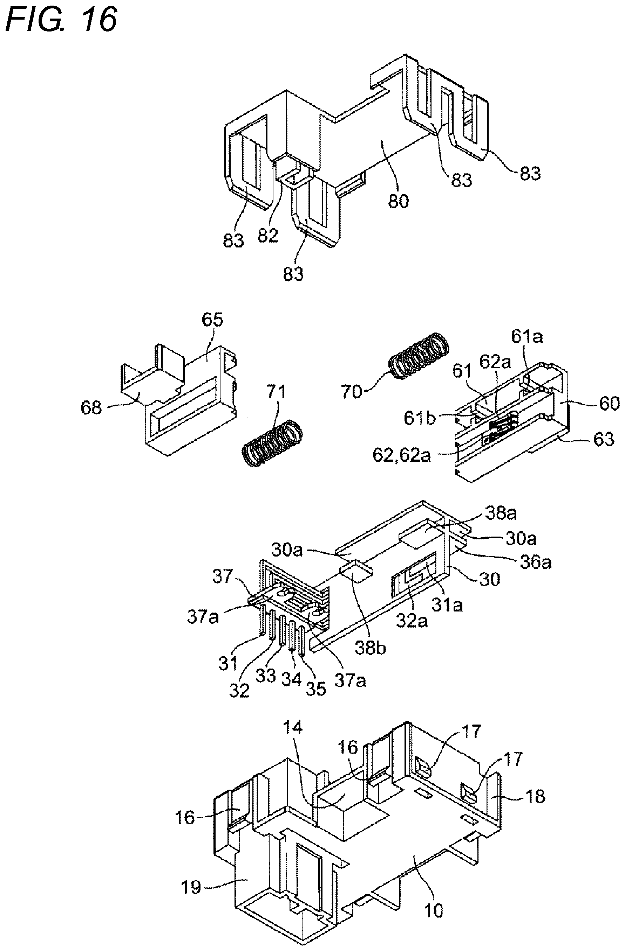

As shown in Figs. 15 and 16, the first slide button 60 has a planar shape so as to engage with the first slide groove 13 via the notch 13a of the base 10, and has a storage groove 61 capable of storing the first coil spring 70 on its inner face, and guide slits 61a, 61b engaging with the guide ribs 36a, 36b of the circuit board 30, respectively, on both sides of the storage groove 61. A first movable touch piece 62 having a pair of elastic contacts 62a, 62a that are swaged below the guide slits 61a, 61b. The elastic contacts 62a have a twin-contact structure to improve the contact reliability. An operating rib 63 protrudes from an outer face of the first slide button 60.

The second slide button 65 has a planar shape so as to engage with the second slide groove 22 via the notch 22a of the base 10, and has a storage groove 66 capable of storing the second coil spring 71 on its inner face, and guide slits 66a, 66b engaging with the guide ribs 38a, 38b of the circuit board 30, respectively, on both sides of the storage groove 66. A second movable touch piece 67 having a pair of elastic contacts 67a, 67a is swaged below the guide slits 66a, 66b. The elastic contacts 67a have a twin-contact structure to improve the contact reliability. An operating rib 68 protrudes from an outer face of the second slide button 65.

The cover 80 has a planar shape capable of covering the base 10, and has a support protrusion 82 having an inverted C-shaped cross section for preventing an escape of the support plate 37 of the circuit board 30. The cover 80 is further provided with a pair of substantially U-shaped engaging claws 83 on edges of its opposed sides.

A method of assembling the above-mentioned components will be described below.

First, first and second coil springs 70, 71 are engaged with the storage grooves 61, 66 of the first and second slide buttons 60, 65, respectively. Then, in the state where the guide slits 61a, 61b, and the guide slits 66a, 66b of the first and second slide buttons 60, 65 are engaged with the guide ribs 36a, 36b, and the guide ribs 38a, 38b of the circuit board 30, respectively, the circuit board 30 is positioned with respect to the storage groove 11 of the base 10. Simultaneously, the first to fifth terminal portions 31b to 35b of the first to fifth fixed contact terminals 31 to 35 insert-molded to the circuit board 30 are inserted into the terminal storage recess 15 of the base 10, and the pair of latching pawls 37a, 37a of the support plate 37 are engaged with the pair of positioning protrusions 15a, 15a on the bottom face of the terminal storage recess 15. As a result, the first to fifth terminal portions 31b to 35b protrude into the connecter receiving portion 19. Thereby, the operating ribs 63, 68 of the first and second slide buttons 60, 65 are slidably attached to the base 10. Thus, the pair of elastic contacts 62a, 67a of the first and second movable touch pieces 62, 67 provided on the first and second slide buttons 60, 65, respectively, can come into contact with and separate from the first to fifth fixed contacts 31a to 35a insert-molded to the circuit board 30. Subsequently, the cover 80 is positioned from above the base 10, and the engaging claws 83 are engaged with the respective engaging protrusions 17 of the base 10 to prevent slip-off. At this time, the support protrusion 82 protruding from the ceiling face of the cover 80 presses the support plate 37 of the circuit board 30 to prevent a rattle.

Next, a method of operating the switch will be described.

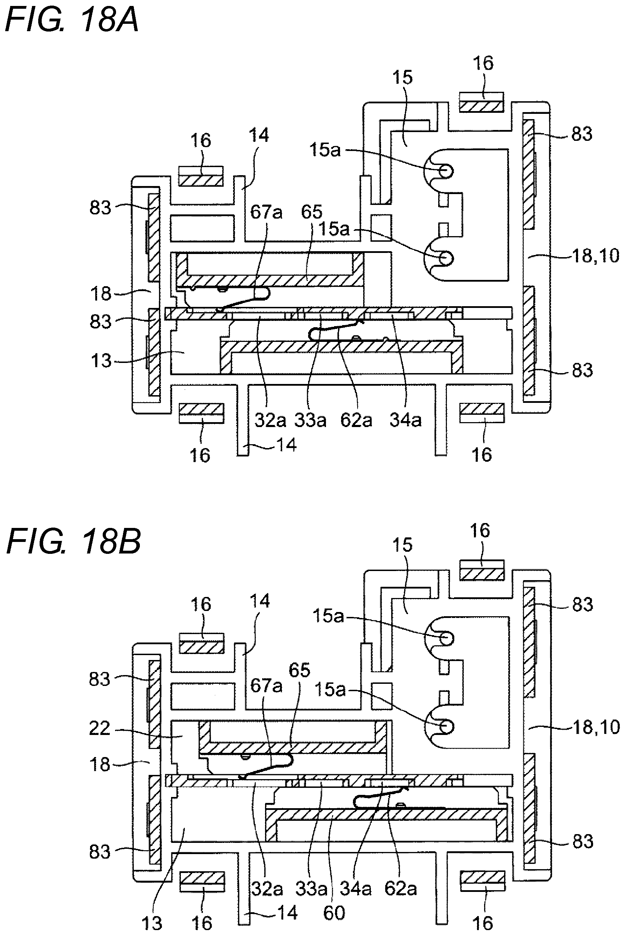

First, before the operation, as shown in Fig. 18A, the elastic contacts 62a on the first slide button 60 are not in contact with the fixed contact 32a on the circuit board 30, and the elastic contacts 67a on the second slide button 65 are not in contact with the fixed contacts 33a, 34a on the circuit board 30.

When the second slide button 65 is slid against the force of the second coil spring 71, the elastic contacts 67a come into contact with the second fixed contact 32a, bringing the first and second fixed contact terminals 31, 32 into conduction to output a signal.

Subsequently, when the first slide button 60 is slid with the second slide button 65 being slid (Fig. 18B), the elastic contacts 62a come into contact with the fourth and fifth fixed contacts 34a, 35a, bringing the fourth and fifth fixed contact terminals 34, 35 into conduction to output a signal. Similarly, when the first slide button 60 is slid in the opposite direction, the elastic contacts 62a come into contact with the third and fifth fixed contacts 33a, 35a, bringing the third and fifth fixed contact terminals 33, 35 into conduction to output a signal.

In the above-mentioned embodiment and examples the two push buttons 40, 45 and the two slide buttons 60, 65 are simultaneously used. However, it is not necessary to use both the buttons at the same time, and it is needless to say that one of the push buttons or the slide buttons may be used as needed.

As a matter of course, a plurality of push buttons or slide buttons as operating members may be arranged on the front and back faces of the circuit board 30.

## Claims

1. A switch comprising:
a circuit board (30) stored in a housing, the circuit board (30) having front and back faces from which at least a pair of fixed contacts (31a, 32a, 33a, 34a, 35a) are exposed;
a first operating member (40) reciprocatively attached to the housing, the first operating member having a movable touch piece (42, 47, 62, 67) configured to slidably contact the fixed contact (31a, 32a, 33a, 34a, 35a) exposed from the front face of the circuit board (30); and
a second operating member (60) reciprocatively attached to the housing, the second operating member having another movable touch piece (42, 47, 62, 67) that is configured to slidably contact the fixed contact (31a, 32a, 33a, 34a, 35a) exposed from the back face of the circuit board (30), wherein
the movable touch piece of the first operating member reciprocates across the front face of the circuit board (30) to slidably contact the fixed contact (31a, 32a, 33a, 34a, 35a) exposed from the front face of the circuit board (30), and
the movable touch piece of the second operating member reciprocates along the back face of the circuit board (30) to slidably contact the fixed contact (31a, 32a, 33a, 34a, 35a) exposed from the back face of the circuit board (30).

## Patentansprüche

1. Schalter mit:
einer Leiterplatte (30), die in einem Gehäuse untergebracht ist, welches eine Vorderseite und eine Rückseite aufweist, an denen mindestens ein Paar fixierte Kontakte (31a, 32a, 33a, 34a, 35a) freiliegt,
einem ersten Bedienelement (40), das hin und her beweglich an dem Gehäuse angebracht ist, wobei das erste Bedienelement ein bewegliches Berührungsstück (42, 47, 62, 67) aufweist, das dazu eingerichtet ist, den an der Vorderseite der Leiterplatte (30) freiliegenden fixierten Kontakt (31a, 32a, 33a, 34a, 35a) gleitend zu kontaktieren, und
einem zweiten Bedienelement (60), das hin und her beweglich an dem Gehäuse angebracht ist, wobei das zweite Bedienelement ein weiteres bewegliches Berührungsstück (42, 47, 62, 67) aufweist, das dazu eingerichtet ist, den an der Rückseite der Leiterplatte (30) freiliegenden fixierten Kontakt (31a, 32a, 33a, 34a, 35a) gleitend zu kontaktieren, wobei
das bewegliche Berührungsstück des ersten Bedienelements quer zur Vorderseite der Leiterblatte (30) hin und her beweglich ist, um den an der Vorderseite der Leiterplatte (30) freiliegenden fixierten Kontakt (31a, 32a, 33a, 34a, 35a) gleitend zu kontaktieren, und
das bewegliche Berührungsstück des zweiten Bedienelements längs der Rückseite der Leiterplatte (30) hin und her beweglich ist, um den an der Rückseite der Leiterplatte (30) freiliegenden fixierten Kontakt (31a, 32a, 33a, 34a, 35a) gleitend zu kontaktieren.

## Revendications

1. Commutateur comprenant :
une carte à circuits imprimés (30) logée dans un boîtier, la carte à circuits imprimés (30) présentant des faces avant et arrière à travers lesquelles est mise à nu au moins une paire de contacts fixes (31a, 32a, 33a, 34a, 35a) ;
un premier organe d'actionnement (40) fixé au boîtier de manière à pouvoir être animé d'un mouvement de va-et-vient, le premier organe d'actionnement comportant un élément tactile mobile (42, 47, 62, 67) conçu pour être en contact glissant avec le contact fixe (31a, 32a, 33a, 34a, 35a) mis à nu à travers la face avant de la carte à circuits imprimés (30) ; et
un second organe d'actionnement (60) fixé au boîtier de manière à pouvoir être animé d'un mouvement de va-et-vient, le second organe d'actionnement comportant un autre élément tactile mobile (42, 47, 62, 67) qui est conçu pour être en contact glissant avec le contact fixe (31a, 32a, 33a, 34a, 35a) mis à nu à travers la face arrière de la carte à circuits imprimés (30), dans lequel :
l'élément tactile mobile du premier organe d'actionnement est animé d'un mouvement de va-et-vient en travers de la face avant de la carte à circuits imprimés (30) pour être en contact glissant avec le contact fixe (31a, 32a, 33a, 34a, 35a) mis à nu à travers la face avant de la carte à circuits imprimés (30), et
l'élément tactile mobile du second organe d'actionnement est animé d'un mouvement de va-et-vient le long de la face arrière de la carte à circuits imprimés (30) pour être en contact glissant avec le contact fixe (31a, 32a, 33a, 34a, 35a) mis à nu à travers la face arrière de la carte à circuits imprimés (30).
